# EUROPEAN PATENT APPLICATION

(11) **EP 2 983 275 A1**
(43) Date of publication of application: **10.02.2016**
(21) Application number: 14778135.5
(22) Date of filing: 26.03.2014
(51) Int. Cl.: H02K 3/30

(54) **COIL FOR LOW-VOLTAGE INVERTER DRIVE MOTOR**

(30) Priority: 02.04.2013 JP 2013076622
(71) Applicant: Hitachi Metals, Ltd., Tokyo 105-8614 (JP)
(72) Inventor: ARAI, Masashi, Tokyo 105-8614 (JP); SUMI, Yousuke, Tokyo 105-8614 (JP); HANAWA, Hidehito, Tokyo 105-8614 (JP); KIKUCHI, Hideyuki, Tokyo 105-8614 (JP)
(74) Representative: Betten & Resch
(86) International application number: PCT/JP2014/058673
(87) International publication number: WO 2014/162959

(57) **Abstract**

The present invention provides a coil for a low-voltage inverter drive motor having insulation performance preventing the occurrence of insulation breakdown even when partial discharge occurs within the warranty period of the motor. A coil for a low-voltage inverter drive motor that is driven at a low voltage of less than AC 700 V using an inverter power supply, wherein the low-voltage inverter drive motor is formed of an insulated wire, and the total discharged charge amount is less than 10 C/mm² until the warranty period expires. The insulated wire is provided with a conductive wire and an insulation coating layer, the insulation coating layer being disposed so as to sheathe the periphery of the conductive wire.

## Description

### [Technical Field]

The invention relates to a coil for a low-voltage inverter drive motor which is driven at a low voltage of less than AC **700** V by an inverter power supply.

### [Background Art]

Motors used in cars or industrial machineries etc. are provided with a coil(s) formed by winding an insulated wire which has a conductive wire and an insulation coating layer (insulator) formed by providing a resin to cover the periphery of the conductive wire. In such a coil, partial discharge may occur mainly between line and line (between an insulation coating layer and another insulation coating layer) or line to ground (between the insulation coating layer and the conductive wire) due to applied voltage. If the insulated wire has microscopic voids in the insulation coating layer or between the conductive wire and the insulation coating layer, an electric field may be concentrated in the voids, so that electric field strength in the voids may then increase so as to cause the partial discharge. If the partial discharge occurs, charged particles collide with the insulation coating layer and this causes e.g., molecular chain scission in the insulation coating layer or heat generation in the insulation coating layer. As a result, the insulation coating layer is progressively thinned due to erosion of the insulation coating layer and the insulation coating layer thus deteriorates. After the insulation coating layer progressively deteriorates, insulation breakdown may eventually occur in the insulated wire.

In recent years, increasingly used as a motor used in cars or industrial machineries etc., is a motor driven by the inverter power supply (also called "inverter drive motor" or "inverter-controlled motor") in terms of energy saving and easy speed adjustment. If the motor is driven by the inverter power supply, the motor can be exposed to a high-voltage pulse with short rise time, so that sharp overvoltage (inverter surge voltage) may be applied to an insulated wire or a coil. The inverter surge voltage may increase the electric field strength in the voids described above, causing the partial discharge in the insulated wire or the coil. This may result in insulation breakdown of the insulated wire.

Thus, insulated wires for the coil used in the inverter drive motor need to have such durability (hereinafter, referred to as "surge resistance") that insulation breakdown is less likely to occur when the motor is driven by the inverter power supply. The surge resistance is closely related to the lifetime of the motor and is an important property to ensure the quality of the motor.

As international standards which reflect an index of the surge resistance, an insulation inspection and diagnosis method using an impulse voltage is known which is disclosed in e.g., Non-Patent Literature **1** and Non-Patent Literature **2.** In Non-Patent Literature **1** and Non-Patent Literature **2,** the predetermined impulse voltage is applied to a rotating machine for inspecting and diagnosing whether the partial discharge occurs.
Alternatively, a voltage (partial discharge inception voltage) at which the partial discharge occurs is measured while gradually increasing the impulse voltage applied to the rotating machine for inspecting and diagnosing whether the voltage is higher than operation voltage of the rotating machine. At present, the standards described in Non-Patent Literature **1** and Non-Patent Literature **2** are not applied to some types of coils such as coils of motors used in cars (vehicles). However, it is considered that even these coils are designed in insulation performance for motor coil basically based on the same concept as the standards described in Non-Patent Literature **1** and Non-Patent Literature **2.**

The coil design in Non-Patent Literature **1** is conducted such that the insulation performance thereof allows no partial discharges in the coils until the expiration of the warranty period of the motor. In other words, the coil design is conducted such that the insulation performance thereof reflects that the partial discharge must not occur or the partial discharge inception voltage of insulated wires forming the coil must not become lower than the operation voltage of the rotating machine even when impulse voltage is repeatedly applied or even after applying complex deterioration equivalent to the expected deterioration occurring over the lifetime of the motor. The coil design in Non-Patent Literature **2** is conducted such that the insulation performance thereof reflects that a predetermined level of partial discharge is allowed or partial discharge inception voltage may become lower, by a predetermined level, than the operation voltage of the rotating machine. In other words, the coil design in Non-Patent Literature **2** is conducted such that the insulation performance thereof reflects that the weak partial discharge not causing the insulation breakdown in the insulated wire is allowed even within the warranty period of the motor.

Conventional coils used in a motor (hereinafter, also referred to a "low-voltage inverter drive motor") driven by an inverter power supply of less than AC **700** V had the insulation performance based on Non-Patent Literature **1**. In other words, the coils for the low-voltage inverter drive motor are generally designed such that the insulation performance thereof reflects that the partial discharge does not occur until the expiration of the warranty period of the motor.

### [Citation List]

### [Non-Patent Literature]

[Non-Patent Literature **1**]
   IEC **60034-18-41**
[Non-Patent Literature **2**]
   IEC **60034-18-42**

### [Summary of Invention]

### [Technical Problem]

However, even when the coils for the low-voltage inverter drive motor are designed such that the insulation performance thereof reflects that the partial discharge does not occur until the expiration of the warranty period of the motor, the status and frequency of the partial discharge may vary e.g., when a drive voltage applied to the motor falls into the unexpected conditions depending on the use conditions of the motor or the inverter power supply. As a result, the partial discharge may occur in the coils.

Thus, it may be increasingly desired in the future that the coils for the low-voltage inverter drive motor have the insulation performance that the insulation breakdown does not occur even when the partial discharge occurs within the warranty period of the motor due to the unexpected conditions.

Therefore, it is an object of the invention to solve such problems and to provide a coil for a low-voltage inverter drive motor that has an insulation performance to prevent the insulation breakdown even when the partial discharge occurs within the warranty period of the motor.

### [Solution to Problem]

To solve the above-mentioned problems, the present invention is configured as follows: The first aspect of the invention provides a coil for a low-voltage inverter drive motor, the motor being driven at a low voltage of less than AC **700** V by an inverter power supply, comprises an insulated wire, wherein the coil is less than **10** C/mm² in a total discharged charge amount until an expiration of a warranty period.

The second aspect of the invention provides the coil for a low-voltage inverter drive motor described in the first aspect, wherein the insulated wire comprises a conductive wire and an insulation coating layer that is disposed covering a periphery of the conductive wire and comprises a resin including an inorganic fine particle.

The third aspect of the invention provides the coil for a low-voltage inverter drive motor described in the first aspect, wherein the insulated wire comprises a conductive wire and an insulation coating layer that is disposed covering a periphery of the conductive wire and comprises a thermoplastic resin with a melting point of not less than **200**°C.

The fourth aspect of the invention provides the coil for a low-voltage inverter drive motor described in any one of the first to third aspects, wherein the insulated wire is not less than **1** mC/mm² in the total discharged charge amount until the expiration of the warranty period.

The fifth aspect of the invention provides the coil for a low-voltage inverter drive motor described in any one of the first to fourth aspects, wherein the insulation coating layer is not less than **5** µm in thickness at the expiration of the warranty period.

### [Advantageous Effects of Invention]

According to an embodiment of the invention, a coil for a low-voltage inverter drive motor can be provided that has an insulation performance to prevent the insulation breakdown even when the partial discharge occurs within the warranty period of the motor.

### [Brief Description of Drawing]

**[****FIG.1****]**

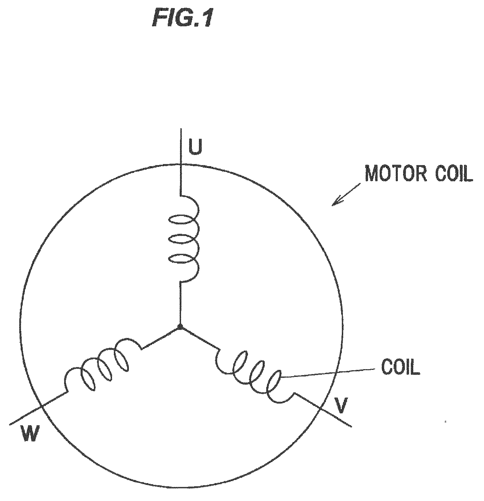

   **FIG.1** is an illustration diagram showing an example of a motor coil using a coil for a low-voltage inverter drive motor in an embodiment of the present invention.

### [Description of Embodiment]

### (Findings of Inventors)

Firstly, the findings of the present inventors will be described before explaining the embodiment of the invention.

As described above, surge resistance of coils used in motors is closely-related to lifetime of motor and is an important property to ensure quality of the motor. As described above, an insulation inspection and diagnosis method using impulse voltage is described in Non-Patent Literature **1** and Non-Patent Literature **2,** etc., as an international standard providing an indicator of surge resistance. Conventionally, coils used in low-voltage inverter drive motors are designed to have insulation performance based on Non-Patent Literature **1.**

However, even in low-voltage inverter drive motors with improved surge resistance, it is often very difficult to maintain the state in which partial discharge does not occur in coils at all until guarantee period for voltage endurance life of the motor (the warranty period of the motor, i.e., the warranty period of the coils) expires, and also difficult to prove that partial discharge does not occur in coils at all.

Therefore, there is a demand for coils for low-voltage inverter drive motor which have insulation performance in compliance with the standard of Non-Patent Literature **2.** In this regard, the standard of Non-Patent Literature **2** is a standard for motors which use coils formed of inorganic insulated wires such as fiber glass covered wire or mica covered wire and are driven at a high voltage of not less than AC **700** V (hereinafter, also referred to as "high-voltage drive motor").

Although the standard of Non-Patent Literature **2** is for high-voltage drive motors, low-voltage inverter drive motors can have insulation performance in compliance with the standard of Non-Patent Literature **2** as long as it is possible to keep driving the motor over the lifetime of the motor, i.e., until the warranty period of the motor expires. In other words, coils for low-voltage drive motor can be in compliance with the standard of Non-Patent Literature **2** as long as insulation breakdown does not occur in insulated wires used for forming the coils even if partial discharge occurs before the warranty period of the coils expires. However, in low-voltage inverter drive motors, status and frequency of occurrence of partial discharge vary depending on the use conditions of the motor (e.g., temperature, humidity and atmospheric pressure of an atmosphere to install the motor, temperature rise during motor drive, usage period and deterioration level of the motor, dirt built up the motor, etc.), the condition of drive voltage applied from an inverter power supply to the motor, or a shape of insulated wire when used, etc. In addition, inverter surge voltage, etc., in low-voltage inverter drive motors is likely to change depending on switching operation of the inverter power supply or performance of the inverter power supply such as a rate of rise of output pulse, installation environment of the motor (e.g., length of a cable from the inverter power supply to the motor, a grounding condition, etc.) or a method of forming the coils. Therefore, it is difficult to predict occurrence of partial discharge in the coils for low-voltage inverter drive motor. In other words, it is necessary to design coils for low-voltage inverter drive motor to have insulation performance suitable for various cases, and it is therefore difficult to produce coils for low-voltage inverter drive motor having insulation performance in compliance with the standard of Non-Patent Literature **2.**

Based on this, the present inventors focused attention on a quantity of electric charge in coils for low-voltage inverter drive motor. That is, it was found that, when the total discharged charge amount until the expiration of the warranty period of motor is within a desired range, it is possible to anticipate that the insulation breakdown does not occur in the coil within the warranty period of the coils even if partial discharge occurs within the warranty period of the motor. As a result, it was found that coils for low-voltage inverter drive motor can easily be adapted to comply with the standard of Non-Patent Literature **2.** The present invention is based on the above-mentioned findings of the inventors.

An embodiment of the invention will be described below.

### (1) Configuration of Coil for low-voltage inverter drive motor

Firstly, a configuration of a coil for a low-voltage inverter drive motor (hereinafter, also simply referred to as "coil") in an embodiment of the invention will be described.

The coil in the present embodiment is used in a low-voltage inverter drive motor (hereinafter, also simply referred to as "motor") which is driven by an inverter power supply at a low voltage of less than AC **700** V.
The coil in the present embodiment can be used as, e.g., a motor coil as shown in **FIG.1** Each of U-, V- and W-phase coils in **FIG.1** comprises one coil, but may be composed of plural coils. Such plural coils can be connected in series or in parallel. The coil connection may be a delta connection, other than a star connection shown in **FIG.1****.**

The coil is formed using an insulated wire. The coil is formed by, e.g., winding the insulated wire. Alternatively, the coil may be formed by joining ends of plural insulated wires to each other. That is, the coil can be formed by aligning and inserting plural insulated wires, each of which has a predetermined length (e.g., **10** cm to **20** cm) and is bent into a U-shape, into a slot and then joining ends of the plural insulated wires to each other. The coil is configured to receive an electric current from an inverter power supply. The total discharged charge amount of the coil until the expiration of the warranty period is less than **10** C/mm², preferably less than **10** C/mm² and not less than less than **1** mC/mm². The total discharged charge amount is the total charge amount of partial discharges occurring in the coil within the warranty period of the motor due to that a higher inverter surge voltage than partial discharge inception voltage of the insulated wire is applied to the insulated wire when the motor is driven by the inverter power supply. The partial discharge defined in the present embodiment is partial discharge which occurs between insulated wires forming a coil (between insulation coating layers).

Due to this, the coil in the present embodiment is applicable to low-voltage inverter drive motors in compliance with the IEC **60034-18-42** standard. That is, by configuring the coil to have such insulation performance that the total charge amount of partial discharge occurring in the coil within the warranty period of the low-voltage inverter drive motor due to that a higher inverter surge voltage than partial discharge inception voltage of the insulated wire is applied to the insulated wire, so-called total discharged charge amount, is less than **10** C/mm², it is possible to prevent insulation breakdown from occurring in the insulated wire forming the coil within the warranty period of the low-voltage inverter drive motor even when partial discharge occurs within the warranty period of the low-voltage inverter drive motor. In other words, the coil has such insulation performance that insulation breakdown does not occur within the warranty period of the motor even when partial discharge occurs within the warranty period of the motor.

In addition, the coil in the present embodiment facilitates to select motors in which the coil is to be used. That is, to select motors in which the coil is to be used, it is not necessary to excessively predict the status and frequency of partial discharge which occurs in the coil due to a difference in the use conditions of the motor, the condition of drive voltage applied to the motor, a method of forming the coil or a shape of the insulated wire when used.

That is, the coil in the present embodiment is applicable to motors used in products such as industrial robots, home appliances or cars, etc. In this case, the coil is configured to have such insulation performance that the total discharged charge amount of the coil until the expiration of the warranty period of the motor is less than **10** C/mm² based on calculation of operating time and operating conditions of products in which the coil (the motor) is used.

The coil when used in, e.g., industrial robot will be described. The warranty periods of motors used in industrial robots are specified by every manufacturer. However, industrial robots (e.g., main components of continuous production plant) are sometimes used even after the expiration of the warranty period of the motor and, in such a case, the cost of loss can be enormous if the motor stops working. Thus, the coil used in industrial robot should have such insulation performance that insulation breakdown does not occur in the insulated wire and the motor does not fail for a long time even after the expiration of the warranty period. In other words, the coil used in industrial robot is designed to reduce partial discharge quantity per unit time, and to have such insulation performance that the total discharged charge amount of the coil until the expiration of the warranty period of the motor is less than **10** C/mm².

Next, the coil when used in home appliance will be described. Home appliances of which motor failed after the warranty period are generally not covered under warranty. Therefore, the coil when used in home appliance has such insulation performance that the total discharged charge amount of the coil within the warranty period is less than **10** C/mm² based on calculation of how long the motor is driven within the warranty period of the motor (i.e., within the warranty period of the home appliance).

Next, the coil when used in vehicle such as car or truck will be described. When the coil is used in a vehicle, the coil has such insulation performance that the total discharged charge amount within the warranty period is less than **10** C/mm² based on calculation of distance traveled and average speed, etc., of the vehicle. In this case, the partial discharge quantity per unit time may be set to a relatively high level. For example, given that the warranty period of the motor is set to be a period of time that the distance traveled of vehicle such as family car reaches **100,000** km, motor drive time is only about **10,000** hours when taking the average speed of the vehicle into account even though the warranted travelling distance is **100,000** km. Among the motor drive time, time of running under overload, during when partial discharge can occur, is shorter. Therefore, for the coil used in family car, etc., the partial discharge quantity per unit time may be set to a relatively high level. Meanwhile, when the coil is used in a business vehicle such as truck, the travelling distance is longer than that of family cars, etc. Even in such a case, the coil can be configured to have such insulation performance that the total discharged charge amount of the coil until the expiration of the warranty period of the motor is less than **10** C/mm² by taking the average travelling distance of the business vehicle into account.

Measurement of the total discharged charge amount of the coil is based on calculation, in which the charge amounts of partial discharges occurred in the coil until the expiration of the warranty period of the motor are added up. The method of measuring the total discharged charge amount is not specifically limited and it is possible to use, e.g., a residual charge method using a series capacitor which is described in "Partial Discharge Measurement and Inverter Surge Insulation under Repetitive Voltage Impulses", Technical Report of Institute of Electrical Engineers of Japan, No.1218, pp.21**.** Alternatively, the total discharged charge amount can be measured, e.g., as follows: a capacitor is connected in series between a coil (insulated wire) and a ground, terminal voltage of the capacitor is continuously detected, each detected terminal voltage is calculated in terms of the partial discharge charge amount and the calculated partial discharge charge amounts are added up. When measuring the total discharged charge amount, it is not necessary to measure the charge amounts of all partial discharges which occur until the warranty period of the motor expires. For example, a value obtained by continuously measuring the partial discharge charge amounts during a much shorter period of time than the warranty period of the motor, or a value obtained by adding up the discretely measured partial discharge charge amounts (e.g., measured at every predetermined time) may be defined as the total discharged charge amount after calculating in terms of a charge amount during the supposed warranty period of the motor (e.g., a period equivalent to **100,000** km).

The measurement of the partial discharge charge amount is not specifically limited. That is, using, e.g., a device capable of measuring partial discharge which occurs in the coil (a partial discharge measurement system) and a measuring instrument capable of calibration of the discharge charge amount in compliance with ICE **60270** (a discharge charge amount measuring instrument), the partial discharge charge amount can be measured at the time that a higher inverter surge voltage than partial discharge inception voltage of the insulated wire forming the coil is applied to the coil. In other words, firstly, partial discharge which occurs in the coil until the expiration of the warranty period of the motor is indirectly calibrated by using a discharge charge amount measuring instrument. Then, the partial discharge calibrated by the discharge charge amount measuring instrument is measured by a partial discharge measurement system, and partial discharge occurred in the coil can be thereby measured. Here, ICE **60270** is a standard partial discharge measurement method to detect partial discharge by synchronizing with the phase of AC voltage, and standardizes a charge amount calibration method based on a low-frequency component in the kHz band.

For measuring the partial discharge charge amount at the time that inverter surge voltage is applied to the coil, for example, a high-pass filter, etc., for frequency separation or a sensor with high frequency band could be used to sensitively detect partial discharge. However, use of such a component/device is not preferable in the present embodiment since low-frequency component of a current generated during partial discharge is cut off and the discharge charge amount measuring instrument may not be able to perform calibration of the discharge charge amount in compliance with ICE **60270.** Meanwhile, for example, a photomultiplier could be used to optically detect partial discharge which occurs in the coil (the insulated wire). The photomultiplier, etc., however, does not directly detect a current generated during partial discharge. Therefore, it is not possible to calibrate the discharge charge amount by the discharge charge amount measuring instrument, hence, not applicable to the present embodiment.

The insulated wire is provided with a conductive wire and an insulation coating layer which has a predetermined thickness (e.g., **10** µm to **20** µm) and is provided by applying an insulating material so as to cover the periphery of the conductive wire. The cross-sectional shape of the insulated wire can be, e.g., a circle or a rectangle, etc. As the conductive wire, it is possible to use, e.g., a strand including copper or aluminum, etc.
The method of applying the insulating material is not specifically limited and can be, e.g., extrusion coating using an extruder, electrophoretic coating or UV coating, etc.

The insulating material used here is, e.g., a resin containing inorganic fine particles, e.g., a resin obtained by dispersing inorganic fine particles in a base resin. As the bas resin, it is possible to use, e.g., polyurethane, polyester, polyester imide, polyamide-imide and polyimide, etc. As the inorganic fine particles, it is possible to use fine particles of, e.g., metal oxide such as silica, alumina, titania or zirconia. Alternatively, semiconductive fine particles of, e.g., indium tin oxide (ITO), zinc oxide, tin oxide or carbon (e.g., carbon nanotube (CNT), graphene, etc.), etc., may be used as the inorganic fine particles. Furthermore, a conductive polymer, e.g., polyaniline, etc., may be used as the inorganic fine particles. The shape of the inorganic fine particles is not specifically limited and may be in a form of, e.g., sphere, layer, column or chain, etc., and also may be hollow or porous. An insulated wire having an insulation coating layer formed of the above-mentioned insulating material is selected to form a coil of which the total discharged charge amount until the expiration of the warranty period of motor is less than **10** C/mm². As a result, the coil has such insulation performance that insulation breakdown does not occur within the warranty period of motor even if partial discharge occurs.

Alternatively, a thermoplastic resin having a melting point of not less than **200**°C may be used as the insulating material. In other words, the insulation coating layer may be provided by coating the periphery of the conductive wire with a thermoplastic resin having a melting point of not less than **200°C.** An insulated wire having an insulation coating layer formed of such an insulating material may be selected to form a coil of which the total discharged charge amount until the expiration of the warranty period of motor is less than **10** C/mm². As a result, the coil has such insulation performance that insulation breakdown does not occur within the warranty period of motor even if partial discharge occurs. If the insulation coating layer is formed of a thermoplastic resin having a melting point of less than **200**°C, insulation performance may degrade due to thermal degradation, resulting in a change in the total discharged charge amount of the coil.

As the thermoplastic resin described above, it is possible to use, e.g., engineering plastics or super engineering plastics such as thermoplastic polyimide (Tm: **338**°C), polyether ether ketone (Tm: **334°**C), polyether ketone (Tm: **373**°C), polyphenylene sulfide (Tm: **285**°C), polybutylene naphthalate (Tm: **243**°C), polybutylene terephthalate (Tm: **224°C**), polyethylene naphthalate (Tm: **269**°C) and polyethylene terephthalate (Tm: **258**°C), etc. Of those, polyether ether ketone, polyether ketone and polyphenylene sulfide, etc., which have a small permittivity, are preferably used. Use of such insulating materials allows the coil to have better insulation performance, in addition to the total discharged charge amount of less than **10** C/mm² until the expiration of the warranty period of motor.

The insulation coating layer is formed to have a relative permittivity of not more than **3.5.** This allows the coil to have better insulation performance, in addition to the total discharged charge amount of less than **10** C/mm² until the expiration of the warranty period of motor. If the relative permittivity of the insulation coating layer is more than **3.5,** the partial discharge inception voltage of the insulated wire decreases. This means that the coil may not have such an insulation performance that the total discharged charge amount until the insulation breakdown of the insulated wire is less than **10** C/mm², as compared to an insulated wire having an insulation coating layer with a relative permittivity of not more than **3.5.**

When partial discharge occurs in the coil, the insulation coating layer of the insulated wire is eroded (shaved off) and thinned by energy from partial discharge. Based on this, the thickness of the insulation coating layer at the time of the expiration of the warranty period of the motor (a remaining thickness) is preferably not less than 5 µm. This allows the coil to have better insulation performance, in addition to the total discharged charge amount of less than **10** C/mm² until the expiration of the warranty period of motor. The remaining thickness of the insulation coating layer is a film thickness of the thinnest portion of the insulation coating layer of the insulated wire forming the coil.

### (2) Method of manufacturing Coil for low-voltage inverter drive motor

Next, a method of manufacturing the coil for a low-voltage inverter drive motor in the embodiment of the invention will be described.

Firstly, an insulation coating layer is formed by, e.g., extruding an insulating material formed of a thermoplastic resin using an extruder, etc., so as to cover the periphery of a conductive wire which is a strand of copper or aluminum, etc., thereby obtaining an insulated wire. Alternatively, an insulation coating layer is formed around the above-mentioned conductive wire by applying an insulating material formed of an insulating varnish using a coating applicator and then baking in an oven, thereby obtaining an insulated wire. The insulation material used is, e.g., an insulating varnish in which resin composed of a base resin and inorganic fine particles dispersed therein is dissolved in a solvent, or a thermoplastic resin having a melting point of not less than **200°C.** Next, a coil is formed using the insulated wire. For example, by winding the insulated wire around an iron core a predetermined number of times, a coil as a winding of the insulated wire is formed. Alternatively, the coil may be formed by aligning and inserting plural insulated wires, each of which has a predetermined length (e.g., **10** cm to **20** cm) and is bent into a U-shape, into a slot and then joining ends of the plural insulated wires to each other. Then, the winding, etc., of the insulated wire is hardened, if required, by impregnating with, e.g., unsaturated polyester varnish, polyimide varnish or a varnish obtained by dispersing silica sol in unsaturated polyester, thereby obtaining a coil having such insulation performance that the total discharged charge amount is less than **10** C/mm². The process of manufacturing the coil for a low-voltage inverter drive motor in the present embodiment which allows partial discharge is thus completed.

### (3) Effects of the present embodiment

In the present embodiment, the following effects are obtained.
(a) In the present embodiment, the coil for a low-voltage inverter drive motor driven at a low voltage of less than AC **700** V using an inverter power supply is formed using an insulated wire and has such insulation performance that the total discharged charge amount until the expiration of the warranty period is less than **10** C/mm². As a result, the coil is in compliance with the IEC **60034-18-42** standard. In other words, even when partial discharge occurs in the coil within the warranty period of the motor, it is possible to prevent insulation breakdown from occurring in the coil within the warranty period of the motor.
   In addition, the coil in the present embodiment facilitates to select motors in which the coil is to be used. That is, to select motors in which the coil is to be used, it is not necessary to excessively predict the status and frequency of partial discharge which occurs in the coil due to a difference in the use conditions of the motor, the condition of drive voltage applied to the motor, a method of forming the coil or a shape of the insulated wire when used.
(b) In the present embodiment, the insulated wire is provided with a conductive wire and an insulation coating layer which is arranged to cover the periphery of the conductive wire and is formed of a resin containing inorganic fine particles. Thus, surge resistance of the insulated wire, i.e., surge resistance of the coil is improved. Therefore, the coil has better insulation performance, in addition to the total discharged charge amount of less than **10** C/mm² until the expiration of the warranty period of motor.
(c) In the present embodiment, the insulated wire is provided with a conductive wire and an insulation coating layer which is arranged to cover the periphery of the conductive wire and is formed of a thermoplastic resin having a melting point of not less than **200°C.** Therefore, the coil has better insulation performance, in addition to the total discharged charge amount of less than **10** C/mm² until the expiration of the warranty period of motor.
(d) In the present embodiment, the remaining thickness of the insulation coating layer when insulation breakdown occurs in the insulated wire is not less than **5** µm. Therefore, the coil has better insulation performance, in addition to the total discharged charge amount of less than **10** C/mm² until the expiration of the warranty period of motor. Examples

Examples according to the invention will be described below. However, the invention is not limited thereto.

### (Example 1)

An insulated wire used in Example **1** had a **50** µm-thick insulation coating layer formed around a **1.0** mm-diameter conductive wire by applying and baking an insulation material, and had a finished outer diameter of **1.1** mm. The insulating material used was an insulating varnish obtained by dispersing silica as inorganic fine particles in polyester imide as a base resin. In detail, a surge resistant enameled wire manufactured by Hitachi Cable, Ltd. (product number: KMKED-20E, silica-containing polyester imide nanocomposite/polyamide-imide double coated wire) was used as the insulated wire. This insulated wire was a twisted wire (a twisted pair wire) formed by twisting two insulated wires together. A winding of the insulated wire was formed by winding the twisted pair wire several times in a distributed manner. Then, the winding of the insulated wire was impregnated with unsaturated polyester varnish to harden the insulated wire, thereby obtaining a coil. This coil was used as a sample of Example **1.**

### (Example 2)

An insulated wire used in Example **2** had a **150** µm-thick insulation coating layer composed of a polyester imide layer formed around a **1.0** mm-diameter conductive wire by applying and baking an insulating varnish obtained by dissolving a polyester imide resin in a solvent, and a polyamide-imide layer further formed around the polyester imide layer by applying and baking an insulating varnish obtained by dissolving a polyamide-imide resin in a solvent, and had a finished outer diameter of **1.3** mm. In detail, an EI/AIW (polyester imide/polyamide-imide) double-coated enameled wire was used as the insulated wire. Other than the above, a coil was made in the same manner as Example **1.** This coil was used as a sample of Example **2.**

### (Example 3)

An insulated wire used in Example **3** had a **150** µm-thick insulation coating layer formed around a **1.0** mm-diameter conductive wire by extrusion coating of an insulated material made of polyphenylene sulfide (PPS) resin, and had a finished outer diameter of **1.3** mm Other than the above, a coil was made in the same manner as Example **1.** This coil was used as a sample of Example **3.**

### (Example 4)

An insulated wire used in Example **4** had a **100** µm-thick polyimide insulation coating layer formed around a **1.0** mm-diameter conductive wire by applying and baking an insulation varnish in which a polyamic acid having an imide concentration of not more than **36**% after imidization by heating is dissolved in a solvent, and had a finished outer diameter of **1.2** mm. Other than the above, a coil was made in the same manner as Example **1.** This coil was used as a sample of Example **4.**

### (Example 5)

An insulated wire used in Example **5** had a **50** µm-thick insulation coating layer composed of a polyester imide layer formed around a **1.0** mm-diameter conductive wire by applying and baking an insulating varnish obtained by dissolving a polyester imide resin in a solvent, and a polyamide-imide layer further formed around the polyester imide layer by applying and baking an insulating varnish obtained by dissolving a polyamide-imide resin in a solvent, and had a finished outer diameter of **1.1** mm. In detail, an EI/AIW (polyester imide/polyamide-imide) double-coated enameled wire was used as the insulated wire. Then, a winding of the insulated wire was formed using a twisted pair wire formed by twisting two insulated wires together and the winding was then impregnated with inorganic fine particle-filled unsaturated polyester varnish to harden the insulated wire, thereby obtaining a coil. Other than the above, a coil was made in the same manner as Example **1.** This coil was used as a sample of Example **5.**

### (Example 6)

An insulated wire used in Example **6** had a **38** µm-thick insulation coating layer formed around a **1.024** mm-diameter conductive wire, and had a finished outer diameter of **1.784** mm. In detail, an enameled wire (US Plus) manufacture by Essex Group Incorporated was used as the insulated wire. Then, a twisted pair wire formed by twisting two insulated wires together was wound several times in a concentrated manner and a winding of the insulated wire was thus formed. Other than the above, a coil was made in the same manner as Example **1.** This coil was used as a sample of Example **6.**

### (Example 7)

An insulated wire used in Example **7** had a **40** µm-thick insulation coating layer formed around a **1.0** mm-diameter conductive wire by applying and baking an insulating varnish obtained by dispersing silica as inorganic fine particles in polyamide-imide as a base resin, and had a finished outer diameter of **1.08** mm. In detail, a surge resistant enameled wire manufactured by Hitachi Cable, Ltd. (product number: KMKED-20A) was used as the insulated wire. Other than the above, a coil was made in the same manner as Example **1.** This coil was used as a sample of Example **7**.

### (Comparative Example 1)

An insulated wire used in Comparative Example **1** had a **50** µm-thick insulation coating layer formed around a **1.0** mm-diameter conductive wire, and had a finished outer diameter of **1.1** mm.- In detail, an EI/AIW (polyester imide/polyamide-imide) double-coated enameled wire was used as the insulated wire. Other than the above, a coil was made in the same manner as Example **1.** This coil was used as a sample of Comparative Example **1.**

### (Comparative Example 2)

An insulated wire used in Comparative Example **2** had a **38** µm-thick insulation coating layer formed around a **1.0** mm-diameter conductive wire, and had a finished outer diameter of **1.076** mm. In detail, an AIW (polyamide-imide) wire was used as the insulated wire. Then, a twisted pair wire formed by twisting two insulated wires together was wound several times in a concentrated manner and a winding of the insulated wire was thus formed. Other than the above, a coil was made in the same manner as Example **1.** This coil was used as a sample of Comparative Example **2.**

### (Comparative Example 3)

An insulated wire used in Comparative Example **3** had a **38** µm-thick insulation coating layer formed around a **1.0** mm-diameter conductive wire, and had a finished outer diameter of **1.076** mm. In detail, an AIW (polyamide-imide) wire was used as the insulated wire. Other than the above, a coil was made in the same manner as Example **1.** This coil was used as a sample of Comparative Example **3.**

### (Comparative Example 4)

An insulated wire used in Comparative Example **4** had a **30** µm-thick insulation coating layer formed around a **1.0** mm-diameter conductive wire and had a finished outer diameter of **1.06** mm. In detail, an enameled wire manufactured by Hitachi Cable, Ltd. (product number: KMKED-**20**E) was used as the insulated wire. Other than the above, a coil was made in the same manner as Example **1.** This coil was used as a sample of Comparative Example **4.**

Table **1** summarizes the configurations of the insulated wires of Examples **1** to **7** and Comparative Examples **1** to **4** and the coil samples.

Partial discharge inception voltages of the insulated wires used to form the samples of Examples **1** to **7** and Comparative Examples **1** to **4** and partial discharge inception voltages of the coil samples were respectively measured. Table **1** shows the results.

Partial discharge inception voltage of the insulated wire was measured as follows: Firstly, two **500** mm-long samples were cut out of each of the insulated wires used to form the samples of Examples **1** to **7** and Comparative Examples **1** to **4.** Then, the two samples cut out of each insulated wire were twisted together with a tension of **14.7** N **(1.5** kgf), thereby making a twisted pair wire. The twisted wire was formed to have a portion with nine twists in the **120** mm-range at the middle in the length direction of the insulated wire sample. Ten of such twisted wires were made from each insulated wire. Then, using an Abisofix, the insulation coating layer of each twisted wire was removed to **10** cm from one end. Then, each twisted wire was kept in a constant-temperature oven at **120°C** for **30** minutes to dry the insulation coating layer of each twisted wire, and after that, each twisted wire was left in a desiccator for **18** hours until the temperature of each twisted wire reached down to room temperature. After that, using a partial discharge automatic test system (DACPD-**3**, manufactured by Soken Electric Co., Ltd.), partial discharge inception voltage of each twisted wire was measured. Partial discharge inception voltage was measured by applying **50** Hz sinusoidal voltage in an atmosphere at a temperature of **23°C** and relative humidity (RH) of **50%** while increasing the voltage at a rate of **10** to **30** V/s. Then, voltage at which partial discharge of **100** pC occurs **50** times per second in each twisted wire was measured. This measurement was repeated three times, and the average value of the three measured values was calculated and defined as partial discharge inception voltage of each twisted wire. Then, based on partial discharge inception voltages of the ten twisted wires made from each insulated wire, the average partial discharge inception voltage of the insulated wires used to form the samples was derived and this average value was defined as partial discharge inception voltage of the insulated wire.

Partial discharge inception voltage of the coil was measured as follows: Firstly, each of the coil samples of Examples **1** to **7** and Comparative Examples **1** to **4** was kept in a constant-temperature oven at **120**°C for **30** minutes and was then left and dried in a desiccator for **18** hours until the temperature of each coil reached down to room temperature. Then, using a partial discharge automatic test system (DACPD-**3**, manufactured by Soken Electric Co., Ltd.), partial discharge inception voltage of each sample was measured. Partial discharge inception voltage was measured by applying **50** Hz sinusoidal voltage in an atmosphere at a temperature of **23**°C and relative humidity (RH) of **50%** while increasing the voltage at a rate of **10** to **30** V/s. Then, voltage at which discharge of **100** pC occurs **50** times per second in each coil was measured. This measurement was repeated three times, and the average value of the three measured values was calculated and defined as partial discharge inception voltage of each coil sample.

**[Table 1]**

| | Insulated wire | | | | | Coil | | |
|---|---|---|---|---|---|---|---|---|
| | Diameter of conductive wire (mm) | Insulation coating layer | | Finished outer diameter (mm) | Partial discharge inception voltage (V) | Winding method | Varnish | Partial discharge inception voltage (V) |
| | | Thickness (mm) | Insulating material | | | | | |
| Example 1 | 1.000 | 0.050 | polyester imide | 1.100 | 1010 | distributed winding | unsaturated polyester | 1140 |
| Example 2 | 1.000 | 0.150 | polyester imide/ polyamide-imide | 1.300 | 1400 | distributed winding | unsaturated polyester | 1420 |
| Example 3 | 1.000 | 0.150 | PPS | 1.300 | 1400 | distributed winding | unsaturated polyester | 1350 |
| Example 4 | 1.000 | 0.100 | polyimide | 1.200 | 1400 | distributed winding | inorganic fine particle-filled unsaturated polyester | 1420 |
| Example 5 | 1.000 | 0.050 | polyester imide/ polyamide-imide | 1.100 | 1000 | distributed winding | unsaturated polyester | 1110 |
| Example 6 | 1.000 | 0.038 | THEIC modified polyester | 1.100 | 790 | concentrated winding | unsaturated polyester | 770 |
| Example 7 | 1.000 | 0.040 | polyamide-imide | 1.080 | 880 | distributed winding | unsaturated polyester | |
| Comparative Example 1 | 1.000 | 0.050 | polyester imide/ polyamide-imide | 1.100 | 1000 | distributed winding | unsaturated polyester | 990 |
| Comparative Example 2 | 1.000 | 0.038 | polyamide-imide | 1.076 | 840 | concentrated winding | unsaturated polyester | 830 |
| Comparative Example 3 | 1.000 | 0.038 | polyamide-imide | 1.076 | 870 | distributed winding | unsaturated polyester | 880 |
| Comparative Example 4 | 1.000 | 0.030 | polyester imide | 1.060 | 860 | distributed winding | unsaturated polyester | 880 |

### <Evaluation of Insulation performance>

Next, using the samples of Examples **1** to **7** and Comparative Examples **1** to **4,** motors respectively having the configurations shown in Table **2** were made. Then, insulation performance of each coil sample was evaluated.

A three-phase induction motor was made using the coil sample of Example **1.** Then, the motor (the coil) was connected to an inverter power supply through a 50m cable. Subsequently, an electric current was supplied to the coil from the inverter power supply at a voltage of AC **650V** to drive the motor. The surge voltage (Vp) applied to the insulated wire forming the coil was **1800V.** The surge voltage here is the maximum value of surge voltage measured at a terminal area of the motor. The maximum potential difference of the motor was **1450V.** The maximum potential difference here is voltage actually applied to the coil with respect to surge voltage.

Using the coil samples of Examples **2** to **5, 7** and Comparative Examples **1, 3** and **4,** three-phase induction motors were respectively made in the same manner as when using the coil sample of Example **1.** Then, each motor (coil) was connected to the inverter power supply through a 50m cable.

Then, an electric current was supplied to the coils from the inverter power supply at a voltage of AC **650V** to drive the three-phase induction motors in which the coil samples of Examples **2** to **5** and Comparative Examples **1** and **4** were used. The surge voltage (Vp) applied to the insulated wire forming the coil was **1800V.** The maximum potential difference was **1450V.**

Meanwhile, an electric current was supplied to the coils from the inverter power supply at a voltage of AC **400V** to drive the three-phase induction motors in which the coil samples of Example **7** and Comparative Example **3** were used. The surge voltage (Vp) applied to the insulated wire forming the coil was **1300V.** The maximum potential difference was **1050V.**

Three-phase PM motors were made respectively using the coil samples of Example **6** and Comparative Example **2.** Then, each motor (coil) was connected to the inverter power supply through a **50**m cable. Subsequently, an electric current was supplied to the coils from the inverter power supply at a voltage of AC **400V** to drive these three-phase PM motors. The surge voltage (Vp) applied to the insulated wire forming the coil was **1300V.** The maximum potential difference was **845V.**

The coil samples of Examples **1** to **7** and Comparative Examples **1** to **4** were evaluated for the warranty period, the total discharged charge amount and the remaining thickness of the insulation coating layer. Table **2** shows the results.

The warranty period was determined as follows: Partial discharge inception voltages (frequency: **100** kHz) of the coils shown in Table **1** were respectively applied to the coil samples of Examples **1** to **7** and Comparative Examples **1** to **4** in an environment at a temperature of **23°C** and relative humidity (RH) of **50%,** and time to insulation breakdown of the coil was measured. Then, time obtained by the measurement was calculated in terms of time at a frequency of **1** kHz and the calculated time was defined as the warranty period. When reaching **100,000** hours in terms of the value at the frequency of **1** kHz, voltage applied to the coil was stopped and the warranty period was evaluated as "not less than **100,000** hours".

The total discharged charge amount of the coil was measured as follows: Firstly, a voltage applicator for applying voltage was connected to each of the samples of Examples **1** to **7** and Comparative Examples **1** to **4** and a capacitor was connected in series between each sample and a ground. Then, partial discharge inception voltage (surge voltage) (frequency: **100** kHz) was applied from the voltage applicator to between tunes of each coil sample in an environment at a temperature of **23°C** and relative humidity (RH) of **50%.** Then, terminal voltage of the capacitor was continuously measured until the above-mentioned warranty period expired or until insulation breakdown occurred in each sample, and the discharge charge amount discharged from each sample and remaining in the capacitor was calculated. Then, the discharge charge amounts until the above-mentioned warranty period expired or until insulation breakdown occurred in each sample were added up and the calculated value was defined as the total discharged charge amount.

The remaining thickness of the insulation coating layer was calculated as follows: Voltage was applied to each sample from the voltage applicator until the warranty period expired or until insulation breakdown occurred in each sample. After that, the thickness of the insulation coating layer of the insulated wire constituting each coil sample was measured by observing the cross section of each coil sample using an electron microscope. Then, the minimum of the measured thicknesses was defined as the value of the remaining thickness.

**[Table 2]**

| | Motor | | | | Evaluation of insulation performance | | |
|---|---|---|---|---|---|---|---|
| | Input voltage (V) | Type | Surge voltage (V) | Maximum potential difference (V) | Warranty period | Total discharged charge amount (C/mm²) | Remaining thickness (µm) |
| Example 1 | 650 | three-phase induction | 1800 | 1450 | not less than 100,000 hours | 8.70 | 15 |
| Example 2 | 650 | three-phase induction | 1800 | 1450 | not less than 100,000 hours | 0.04 | 150 |
| Example 3 | 650 | three-phase induction | 1800 | 1450 | not less than 100,000 hours | 0.05 | 150 |
| Example 4 | 650 | three-phase induction | 1800 | 1450 | not less than 100,000 hours | 0.04 | 100 |
| Example 5 | 650 | three-phase induction | 1800 | 1450 | not less than 100,000 hours | 8.66 | 15 |
| Example 6 | 400 | three-phase PM | 1300 | 845 | not less than 100,000 hours | 3.12 | 25 |
| Example 7 | 400 | three-phase induction | 1300 | 1050 | not less than 100,000 hours | 4.72 | 20 |
| Comparative Example 1 | 650 | three-phase induction | 1800 | 1450 | 8.6 hours | 11.1 | breakdown |
| Comparative Example 2 | 400 | three-phase PM | 1300 | 845 | 3532 hours | 18.5 | breakdown |
| Comparative Example 3 | 400 | three-phase induction | 1300 | 1050 | 221 hours | 12.8 | breakdown |
| Comparative Example 4 | 650 | three-phase induction | 1800 | 1450 | 85,400 hours | 19.28 | breakdown |

It was confirmed from Table **2** that, in the motors using the samples of Examples **1** to **7** of which total discharged charge amount of the coil until the expiration of the warranty period is less than **10** C/mm², partial discharge occurs before the warranty period expires **(100,000** hours elapses) but insulation breakdown does not occur in the coil. In other words, it was confirmed that it is possible to prevent insulation breakdown from occurring in the coil within the warranty period even when partial discharge occurs in the coil. This demonstrated that, when the coil has such insulation performance that the total discharged charge amount until the expiration of the warranty period is less than **10** C/mm², the coil is in compliance with the IEC **60034-18-42** standard.

On the other hand, it was confirmed that the warranty period of the motor was short when using the coil samples of Comparative Examples **1** to **4** formed using the insulated wires which have such insulation performance that the total discharged charge amount is not less than **10** C/mm², i.e., when the coils have such insulation performance that the total discharged charge amount is not less than **10** C/mm². This indicates that, if such motors are used in products such as industrial robots, home appliances or automobiles, etc., insulation breakdown may occur in the coils within the warranty period of the products such as industrial robots, home appliances or automobiles, etc., resulting in that the motors stop working.

A measurement was also conducted on the sample of Example **1** to find how time to insulation breakdown of the coil is different depending on the voltage applied. Table **3** shows the results.

**[Table 3]**

| | Insulated wire | | | | | Voltage applied (V) | Evaluation of insulation performance | | |
|---|---|---|---|---|---|---|---|---|---|
| | Diameter of conductive wire (mm) | Insulation c oating layer | | Finished outer diameter (mm) | Partial discharge inception voltage (V) | | Warranty period (hours) | Total discharged charge amount (C/mm²) | Remaining thickness (µm) |
| | | Thickness (µm) | Insulating material | | | | | | |
| Example 1 | 1.000 | 0.050 | polyester imide | 1.100 | 1010 | 1350 | not less than 100,000 hours | 2.30 | 35 |
| | | | | | | 1450 | not less than 100,000 hours | 8.70 | 15 |
| | | | | | | 1550 | 92,500 hours | 16.7 | breakdown |
| | | | | | | 1650 | 65,000 hours | 23.2 | breakdown |

As shown in Table **3,** when voltage applied to the coil was **1350V**, the total discharged charge amount until the expiration of the warranty period **(100,000** hours) was **2.30** C/mm². Meanwhile, when voltage applied to the coil was **1450V**, the total discharged charge amount until the expiration of the warranty period **(100,000** hours) was **8.70** C/mm². Furthermore, when voltage applied to the coil was **1550V,** the total discharged charge amount until the expiration of the warranty period **(100,000** hours) was **16.7** C/mm². In this case, time to insulation breakdown of the coil was **92,500** hours. Then, when the applied voltage was **1650V,** the total discharged charge amount until insulation breakdown of the coil was **23.2** C/mm². That is, insulation breakdown occurred in the coil before the expiration of the warranty period **(100,000** hours).

As described above, it was confirmed that, in case of using the sample of Example **1** in a motor in which applied voltage is approximately not more than **1450V** (i.e., approximately not more than the maximum potential difference), it is possible to prevent insulation breakdown from occurring in the coil and thus to prevent the motor from stopping working even if partial discharge occurs within the warranty period of the motor. This shows that, when using the coil sample of Example **1** in a low-voltage inverter drive motor operating at less than AC **700** V which is lower than the applied voltage of **1450V,** insulation breakdown does not occur in the insulated wire forming the coil within the warranty period of the motor even when partial discharge occurs in the insulated wire forming the coil within the warranty period of the motor, and it is thus possible to prevent the motor from stopping working.

The same as the sample of Example **1** applies to the samples of Examples **2** to **7** even though not shown in the Table.

Based on the results described above, in the coil formed winding an insulated wire and having such insulation performance that the total discharged charge amount until the expiration of the warranty period is not less than **10** C/mm², it is possible to prevent insulation breakdown from occurring in the coil even when partial discharge occurs in the coil within the warranty period of the motor. In other words, the coil is in compliance with the IEC **60034-18-42** standard.

### [Industrial Applicability]

The coil of the invention is useful for motors used in products such as industrial robots, home appliances or automobiles, etc.

## Claims

1. A coil for a low-voltage inverter drive motor, the motor being driven at a low voltage of less than AC **700** V by an inverter power supply, comprising an insulated wire,
wherein the coil is less than **10** C/mm² in a total discharged charge amount until an expiration of a warranty period.

2. The coil for a low-voltage inverter drive motor according to claim **1,** wherein the insulated wire comprises a conductive wire and an insulation coating layer that is disposed covering a periphery of the conductive wire and comprises a resin including an inorganic fine particle.

3. The coil for a low-voltage inverter drive motor according to claim **1,** wherein the insulated wire comprises a conductive wire and an insulation coating layer that is disposed covering a periphery of the conductive wire and comprises a thermoplastic resin with a melting point of not less than **200°C.**

4. The coil for a low-voltage inverter drive motor according to any one of claims **1** to **3,**
wherein the insulated wire is not less than **1** mC/mm² in the total discharged charge amount until the expiration of the warranty period.

5. The coil for a low-voltage inverter drive motor according to any one of claims **1** to **4,**
wherein the insulation coating layer is not less than **5** µm in thickness at the expiration of the warranty period.
